# EUROPÄISCHE PATENTSCHRIFT

(11) **EP 3 216 656 B1**
(45) Veröffentlichungstag und Bekanntmachung des Hinweises auf die Patenterteilung: **25.07.2018**
(21) Anmeldenummer: 16159214.2
(22) Anmeldetag: 08.03.2016
(51) Int. Cl.: B60R 16/00, B60T 17/00

(54) **SCHIENENFAHRZEUG**
RAIL VEHICLE
VÉHICULE SUR RAIL

(43) Veröffentlichungstag der Anmeldung: 13.09.2017
(73) Patentinhaber: Siemens Aktiengesellschaft, 80333 München (DE)
(72) Erfinder: Fuchs, Andreas, 91056 Erlangen (DE)

(56) Entgegenhaltungen:
- DE-A1- 3 928 108
- DE-A1-102012 015 041
- DE-A1-102012 203 132

## Beschreibung

Die Erfindung betrifft ein Schienenfahrzeug aufweisend einen elektrischen Antrieb mit Leistungshalbleitern und ein mit Druckluft betriebenes Bremssystems, wobei die Leistungshalbleiter in einem Gehäuse angeordnet sind. Die Erfindung betrifft weiter ein Verfahren zum Betreiben eines solchen Schienenfahrzeugs.

Elektrische, elektronische oder mechanische Bauelemente und Komponenten sind empfindlich gegenüber Feuchtigkeit in der Umgebungsluft. Diese Bauelemente kommen in einer Vielzahl von Geräten zur Anwendung. So sind beispielsweise Leiterplatten elektronischer Geräte aus elektrischen oder elektronischen Bauelementen aufgebaut. Anhaltende Feuchte gefährdet diese Bauelemente so dass diese häufiger ausfallen als trocken betriebene Bauelemente. Dieses betrifft alle oder zumindest nahezu alle elektronischen Komponenten und Geräte, die aus elektrischen, elektronischen oder mechanischen Bauelementen aufgebaut sind.

Zur Erhöhung der Verfügbarkeit und Zuverlässigkeit, sowie zur Senkung des Risikos eines Ausfalls eines Schienenfahrzeugs ist es von besonderer Bedeutung, die Komponenten des elektrischen Antriebs des Schienenfahrzeugs in einer möglichst trockenen Umgebung zu betreiben.

Ein besonderes Problem ergibt sich bei Anwendungen, die in nicht-klimatisierten oder nicht-temperierten Umgebungen betrieben werden. Dies ist insbesondere bei Schienenfahrzeugen der Fall. Die in dieser Umgebung vorhandene Luftfeuchtigkeit kann zu einer Kondensation und damit zu Feuchtigkeit an den Bauelementen führen. Ebenso führt eine Schwankung von Temperaturen zu einer Kondensation der Feuchtigkeit aus der Luft an den Bauelementen. Diese Kondensation reduziert die Lebensdauer der Bauelemente, so dass diese häufiger oder früher ausfallen als trocken betriebene Bauelemente. Darüber hinaus kann Korrosion, hervorgerufen durch die Feuchte, einen sicheren und zuverlässigen Betrieb dieser Komponenten und der daraus aufgebauten Schienenfahrzeuge verhindern. Gerade für Schienenfahrzeuge ist ein sicherer und zuverlässiger Betrieb erforderlich. Ein Ausfall des elektrischen Antriebs kann zu aufwendigen und kostenintensiven Bergungsmaßnahmen führen. Selbst der Ausfall nur von Teilen des elektrischen Antriebs führt zu teilweise deutlichen Verspätungen. Durch fahrplanmäßige Abhängigkeiten unterschiedlicher Züge führt ein Ausfall von Teilen eines Antriebs häufig zu Störungen im gesamten Verbundnetz des Schienenfahrzeugbetreibers.

Insbesondere in tropischen Ländern hat es sich dabei bewährt, solche oben beschriebene Anordnungen in relativ luftdichte Schränke einzubauen und/oder in diese Schränke Trocknungsmittel einzubringen. Das Trocknungsmittel muss dann zyklisch getauscht werden. Je nach Umgebungsfeuchte können hieraus sehr kurze Austauschzeiten von wenigen Tagen resultieren. Dies beeinträchtigt durch die anfallenden kurzen Wartungsintervalle die Verfügbarkeit solcher Anlagen. Gleichzeitig steigen damit die Wartungskosten für den Betrieb dieser Anlagen.

Aus der noch nicht veröffentlichten EP 14 183 340.0 ist ein Verfahren zur Reduzierung der Luftfeuchte in einem Gehäuse bekannt, bei dem im Gehäuse Druckluft entspannt wird.

Weiterer Stand der Technik der Gattung des Oberbegriffs des Anspruchs 1 ist beispielsweise in den Dokumenten DE 10 2012 203132 A1, DE 39 28 108 A1 oder DE 10 2012 015041 A1 angegeben.

Der Erfindung liegt die Aufgabe zugrunde, ein Schienenfahrzeug mit einer höheren Zuverlässigkeit anzugeben.

Diese Aufgabe wird durch ein Schienenfahrzeug aufweisend einen elektrischen Antrieb mit Leistungshalbleitern und ein mit Druckluft betriebenes Bremssystems gelöst, wobei die Leistungshalbleiter in einem Gehäuse angeordnet sind, wobei das Schienenfahrzeug eine Entspannvorrichtung aufweist, wobei das Gehäuse und das Bremssystem derart miteinander verbunden sind, dass die Druckluft aus dem Bremssystem dem Innern des Gehäuses zuführbar ist, wobei die Entspannvorrichtung derart zwischen Gehäuse und Bremssystem angeordnet ist, dass die dem Gehäuse zuführbare Druckluft vor dem Zuführen in das Innere des Gehäuses entspannbar ist. Die Aufgabe wird ferner durch ein Verfahren zum Betreiben eines solchen Schienenfahrzeugs gelöst, wobei die Druckluft aus dem Bremssystem dem Innern des Gehäuses zugeführt wird, wobei die dem Gehäuse zugeführte Druckluft vor dem Zuführen in das Innere des Gehäuses mittels der Entspannvorrichtung entspannt wird.

Weitere vorteilhafte Ausgestaltungen der Erfindung sind in den abhängigen Ansprüchen angegeben.

Der Erfindung liegt die Erkenntnis zugrunde, dass sich die Luftfeuchte in einem Gehäuse eines Schienenfahrzeugs dadurch reduzieren lässt, dass entspannte Druckluft dort eingebracht wird. Der Begriff Druckluft definiert Luft, die aus einem Druckluftsystem, wie beispielsweise dem Bremssystem des Schienenfahrzeugs entnommen wird. Diese kann, muss aber nicht einen höheren Druck als die Umgebung aufweisen. Unter Entspannen versteht der Fachmann die Reduzierung des Drucks eines Gases bei gleichzeitiger Erhöhung seines Volumens. Durch das Entspannen von Druckluft wird die Feuchte der vorhandenen Luft derart reduziert, dass die relative Feuchte der Luft sinkt. In dem Gehäuse befindliche Luft mit einem höheren Anteil an Luftfeuchtigkeit wird durch die hinzukommende entspannte Druckluft verdrängt oder die Druckluft vermischt sich mit der vorhandenen Luft im Gehäuse, so dass die Luftfeuchte im Gehäuse sinkt. Diese dann trockene Luft kann Feuchtigkeit von Bauelementen, insbesondere von Leistungshalbleitern, aufnehmen, um dadurch das Bauelement zu trocknen. Dies verlängert die Lebensdauer des Bauteils und reduziert die Wahrscheinlichkeit eines Ausfalls. Darüber hinaus oder alternativ verhindert die trockene Luft im Gehäuse die Kondensation von Feuchtigkeit am Bauelement. Dadurch wird zuverlässig die Ausbildung von Kriechstrecken verhindert, die zur Ausbildung von Überschlägen führen. Insbesondere durch Temperaturschwankungen in der Umgebung hervorgerufene Kondensation kann durch das Verfahren zur Reduzierung der Luftfeuchte zuverlässig verhindert werden. Der Begriff der Bauelemente umfasst neben elektrischen, elektronischen und mechanischen Komponenten auch Isoliermaterialien beispielsweise für Schall- und Temperaturdämmung sowie Dichtungsmassen, die aufgrund ihrer Beschaffenheit Feuchtigkeit aus der Luft aufnehmen können. Das Gehäuse mit den Leistungshalbleitern kann dabei dicht ausgeführt sein, um ein Eindringen von feuchter Luft möglichst gering zu halten. Dabei hat es sich als vorteilhaft erwiesen, wenn das Gehäuse eine Schnittstelle nach außen aufweist, mit der der Luftaustausch vom Gehäuse zur Umgebung geregelt oder gesteuert werden kann. Dies kann beispielsweise mittels Blenden oder Klappen geschehen, die vor Öffnungen des Gehäuses angeordnet sind. Damit ist es beispielsweise möglich, das Eindringen von Luft, insbesondere von feuchter Luft in das Gehäuse zu verhindern.

Es hat sich dabei als vorteilhaft erwiesen, die Entspannung der Druckluft außerhalb des Gehäuses durchzuführen. Damit besteht bei einem Brand im Gehäuse nicht die Gefahr, dass ein Zufluss steuerndes Ventil beschädigt wird und der Brand unkontrollierbar mit Sauerstoff aus der Druckluft versorgt und gefördert wird. Für einen hohen Brandschutz hat es sich daher als vorteilhaft erwiesen, ein entsprechendes Ventil oder eine Entspannvorrichtung außerhalb des Gehäuses anzuordnen.

Darüber hinaus kann das Gehäuse alternativ oder ergänzend auch dicht, insbesondere druckdicht, ausgeführt sein, um ein Eindringen von feuchter Luft möglichst gering zu halten. Dabei hat es sich als vorteilhaft erwiesen, wenn das Gehäuse eine Schnittstelle, beispielsweise in Form eines Überdruckventils nach außen aufweist, mit der der Luftdruck im Gehäuse geregelt oder gesteuert werden kann. Damit ist es beispielsweise möglich, einen im Vergleich zur Umgebung des Gehäuses höheren Druck im Innern des Gehäuses zu erzeugen, was ein Eindringen feuchter Luft aus der Umgebung auf einfache Weise verhindert.

Des Weiteren erlaubt die Schnittstelle zur Druckluftregulierung das Einbringen hoher Luftmengen ohne eine direkte Auswirkung auf den Luftdruck im Innern des Gehäuses zu haben. Damit sind Luftmenge der entspannten Druckluft und der Druck im Gehäuse voneinander entkoppelt. Weiter eignet sich dieses Verfahren im Besonderen für Gehäuse, die nicht hermetisch dicht oder nicht druckdicht sind. Ein solches Gehäuse kann dazu beispielsweise Öffnungen aufweisen. Das Eintreten von Luft, dessen Feuchtigkeit zu einer Kondensation an den Bauelementen führen kann oder führt, kann durch das Einbringen der entspannten Druckluft verhindert werden. Selbst wenn feucht Luft von außen eindringt, wird diese mit der trockenen, entspannten Druckluft derart vermischt, dass die in dem Gehäuse dann vorhandene Luft eine nur geringe resultierende, relative Fechte aufweist. Das Verfahren bewirkt, dass die Luft weniger Feuchtigkeit enthält und auch bei fallender Temperatur keine Kondensation an den Bauelementen, insbesondere an den Leistungshalbleitern, eintritt. Das Entspannen der Druckluft kann dabei kontinuierlich, zu bestimmten Zeitpunkten, beispielsweise zyklisch, oder ereignisgesteuert erfolgen. Eine ereignisorientierte Steuerung kann in Abhängigkeit der relativen Luftfeuchtigkeit, der Temperatur oder der Temperaturschwankung bzw. Temperaturänderung erfolgen. Ebenso ist es möglich, die Luftfeuchtigkeit im Gehäuse zu messen und bei Überschreiten eines Grenzwertes Druckluft dem Gehäuse zuzuführen. Der Vorgang des Entspannens kann dabei über die Vorrichtung zum Entspannen von Druckluft, wie beispielsweise Ventile oder Düsen gesteuert erfolgen. Für die Steuerung der Luftmenge und/oder der Zeitpunkte kann eine Steuerung oder eine Regelung vorgesehen werden, welche die Zufuhr trockener Luft in Abhängigkeit von Umgebungsparametern, wie beispielsweise Feuchtegehalt der Umgebungsluft oder der Luft im Innern des Gehäuse, Temperatur etc. regelt und/oder steuert. Bei dem erfindungsgemäßen Verfahren kann die Druckluft dem Bremssystem des Schienenfahrzeugs in vorteilhafter Weise einem Rohrsystem, einem Druckschlauch oder einem Druckspeicher, wie beispielsweise einem Druckbehälter, entnommen werden.

Das Bremssystem eines Schienenfahrzeugs, insbesondere die Druckluft des Bremssystems steht im gesamten Schienenfahrzeug zur Verfügung steht. Zum Bremssystem gehören neben der Hauptluftleitung (Abkürzung HL oder HLL) zur Verbindung der Bremseinrichtungen des Schienenfahrzeugs auch die Hauptluftbehälterleitung (Abkürzung HBL oder HB) zur Versorgung des Führerbremsventils oder auch teilweise zum Auffüllen des durch eine Bremsung verbrauchten Luftvorrats. Sowohl die Druckluft aus der Hauptluftleitung wie auch die Druckluft aus der Hauptluftbehälterleitung eignen sich zur Durchführung des erfindungsgemäßen Verfahrens. Damit kann an beliebiger Stelle des Schienenfahrzeugs die Luftfeuchtigkeit in einem Gehäuse reduziert und/oder darin befindliche Komponenten gekühlt werden. Ebenso kann dadurch die Kondensation von Feuchtigkeit an einem oder mehreren Bauelementen wie Leistungshalbleitern verhindert werden.

An die Druckluft eines Bremssystems von einem Schienenfahrzeug existieren besondere Anforderungen bezüglich der darin enthaltenen Feuchte, auch Restfeuchte genannt. Die Druckluft in Schienenfahrzeugen wird daher meistens durch einen Drucklufttrockner getrocknet, so dass eine Restfeuchte von unter 35% in der Druckluft entsteht. Unter Trocknung versteht man die Reduktion der in der Druckluft vorhandenen Feuchtigkeit. Bei vielen Anwendungen, die Druckluft erfordern, wird bereits eine Trocknung direkt nach der Kompression durchgeführt. Dazu sind Kompressoren oftmals bereits mit einer entsprechenden Trocknungsvorrichtung ausgerüstet. Bezüglich der Restfeuchte in der Druckluft des Bremssystems eines Schienenfahrzeugs gibt es Vorgaben zur Luftqualität aus der internationalen ISO Norm 8573, die eine Restfeuchte der Druckluft von weniger als 35% fordert. Diese geringe Feuchte, auch als Restfeuchte bezeichnet, sinkt weiter erheblich ab, wenn zur Trocknung der Bauelemente die Druckluft entspannt wird. Durch das Vorhandensein von Druckluft für das Bremssystem eines Schienenfahrzeugs und der dort herrschenden hohen Anforderungen an die Luftqualität mit einer Restfeuchte von unter 35%, eignet sich diese Druckluft im besonderen Maße für die Zuführung in das Gehäuse mit den Leistungshalbleitern.

Bei einer weiteren vorteilhaften Ausgestaltungsform weist das Gehäuse Mittel zum Führen der Druckluft auf, die derart angeordnet sind, dass die Druckluft zumindest teilweise entlang der Leistungshalbleiter, eines Kühlkörpers des Leistungshalbleiters und/oder einer Stromschiene strömt. Das Entspannen der Druckluft bewirkt neben einer Absenkung der relativen Feuchte eine Temperaturabsenkung dieser Druckluft, die nach dem Entspannen in das Gehäuse eingebracht wird. Dieser Effekt kann zur Kühlung von Komponenten im Innern des Gehäuses, insbesondere zur Kühlung der Leistungshalbleiter oder der Stromschiene genutzt werden. Mit dieser Temperaturabsenkung in der Druckluft können die in dem Gehäuse angeordneten Leistungshalbleiter, wie beispielsweise die Leistungshalbleiter des elektrischen Antriebs, gekühlt werden. Bei dem Betrieb von Leistungshalbleitern entsteht aufgrund ihrer unvermeidbaren elektrischen Verluste Wärme, die an die Umgebung abzuführen ist. Durch das Heranführen von entspannter Druckluft, wird die Temperatur in der Umgebung des Leistungshalbleiters reduziert. Damit erhöht sich die Leistungsfähigkeit des Leistungshalbleiters. Anders ausgedrückt ist die Entspannvorrichtung derart zwischen Gehäuse und Bremssystem angeordnet, dass die dem Gehäuse zuführbare Druckluft vor dem Zuführen in das Innere des Gehäuses derart entspannbar ist, dass die Temperatur der dem Gehäuse zugeführten entspannten Druckluft kleiner ist als die Temperatur der im Gehäuse befindlichen Luft. Die Kühlwirkung erfolgt beispielsweise über die Oberfläche des Leistungshalbleiters oder über einen mit dem Leistungshalbleiter verbundenen Kühlkörper. Oftmals ist ein solcher Kühlkörper, der mit dem Leistungshalbleiter thermisch verbunden ist, zur Abfuhr von Wärme der Leistungshalbleiter vorgesehen. Die in das Gehäuse eingebrachte Druckluft kommt häufig auch mit Teilen des Kühlkörpers in Berührung, so dass über diesen Kühlkörper eine weitere Kühlwirkung eintritt. Als besonders vorteilhaft hat es sich erwiesen, die zugeführte Druckluft derart zu leiten, dass diese zumindest an Teilen des Kühlkörpers entlangströmt. Eine weitere Möglichkeit besteht darin, einen weiteren Kühlkörper am Leistungshalbleiter vorzusehen der von der entspannten Druckluft durchströmt wird um Verluste des Leistungshalbleiters an die Luft in der Umgebung des Leistungshalbleiters abzugeben und die Kühlwirkung zu verbessern.

Als besonders vorteilhaft hat sich das Verfahren erwiesen, wenn das Gehäuse neben den Leistungshalbleitern mindestens eine Stromschiene aufweist. Die Stromschiene, beispielsweise mit Kupferschienen, wird verwendet, um die Leistungshalbleiter elektrisch zu kontaktieren. Durch die Ströme, die durch die Stromschiene fließen, erwärmen sich diese Schienen teilweise deutlich. Die Stromschiene ist meist auf einer Seite des Leistungshalbleiters angebracht, die einer weiteren Seite des Leistungshalbleiters gegenüberliegt, an der der Kühlkörper befestigt ist. Somit ist es nur schwierig möglich, die Stromschiene über den Kühlkörper zu kühlen bzw. zu entwärmen. Aus diesem Grunde wird die Stromschiene meist nicht hinsichtlich ihrer Stromtragfähigkeit ausgelegt, sondern die thermischen Bedingungen bestimmen die Dimensionierung der Stromschiene. Durch die kühlende Wirkung der dem Gehäuse zugeführten Druckluft kann die Stromschiene derart gekühlt werden, dass diese kleiner und leichter und somit kostengünstiger ausgelegt werden kann. Als besonders vorteilhaft hat es sich erwiesen, die dem Gehäuse zugeführte Druckluft derart zu führen, dass diese zumindest mit Teilen der Stromschiene in Berührung kommt. Aufgrund der hohen Materialkosten, insbesondere bei der üblichen Verwendung von Kupfer für die massive Stromschiene, können mit dieser Anordnung hohe Kosten bei der Dimensionierung der Stromschiene eingespart werden.

Bei einer weiteren vorteilhaften Ausgestaltungsform ist die Entspannvorrichtung als ein Druckminderventil ausgebildet. Auf diese Weise lässt sich einfach und kostengünstig der Druck der dem Bremssystem entnommenen Druckluft auf einen beliebigen Wert absenken, der zwischen dem Wert der Druckluft und der Umgebung liegt.

Bei einer weiteren vorteilhaften Ausgestaltungsform ist das Gehäuse luftdurchlässig ausgeführt ist. Die luftdurchlässige Ausführung führt dazu, dass das Gehäuse nicht druckdicht ist, Eine nicht druckdichte Konstruktion ist besonders kostengünstig herstellbar. Dazu werden beispielsweise in dem Gehäuse Öffnungen vorgesehen. Wenn in dem Gehäuse Leistungshalbleiter, beispielsweise die Leistungshalbleiter eines Stromrichters für Traktion oder Hilfsbetriebe, angeordnet sind, hat das Gehäuse Ausmaße, die eine druckdichte Ausführung deutlich teurer machen. Es hat sich gezeigt, dass die Vorteile einer druckdichten Ausführung im Hinblick auf das Eintreten von feuchter Luft auch durch einen erhöhten Durchsatz an Druckluft deutlich günstiger erreichen lassen.

Bei einer weiteren vorteilhaften Ausgestaltungsform weist das Bremssystem eine Hauptluftbehälterleitung und/oder eine Hauptluftleitung auf, wobei die dem Gehäuse zuführbare Druckluft aus der Hauptluftbehälterleitung und/oder der Hauptluftleitung entnehmbar ist. Ein Luftpresser, der Kompressor eines Schienenfahrzeuges, hält den Druck in der Hauptluftbehälterleitung zwischen 6,5 und 10 bar. Es hat sich gezeigt, dass die entstehende Abkühlung der Druckluft bei der Entspannung durch die Entspannvorrichtung zu einer Absenkung der Lufttemperatur im Innern des Gehäuses führt, welche eine höhere Leistungsfähigkeit der dort angeordneten Leistungshalbleiter bewirkt. Darüber hinaus kann auch die Stromschiene, die mit den Leistungshalbleitern verbunden ist, deutlich kleiner ausfallen, so dass beispielsweise bei der Verwendung von Kupfer für die Stromschiene die Kosten der Stromschiene teilweise deutlich reduziert werden können. Somit bietet sich im Schienenfahrzeug im Besonderen ein Luftdruck zwischen 6,5 bar und 10 bar für die Entnahme von Druckluft aus dem Bremssystem an. Darüber hinaus ist dies ein Standardwert bei Schienenfahrzeugen, so dass notwendige Komponenten, wie beispielsweise Druckminderventile, kostengünstig zur Verfügung stehen.

Entsprechendes gilt auch für die Verwendung von Druckluft aus der Hauptluftleitung. Diese weist Druckluft mit einem Druck im Bereich von 4 bar bis 6 bar auf. Auch diese Druckluft eignet sich für die Trocknung der Luft im Gehäuse und/oder für die Kühlung von im Gehäuse angeordneten Komponenten wie beispielsweise Leistungshalbleiter und/oder Stromschiene. Aufgrund des im Vergleichs zur Hauptluftbehälterleitung geringen Drucks ist die Kühlwirkung zwar geringer, allerdings hat es sich für eine Vielzahl von Geräten mit darin angeordneten Leistungshalbleitern für hinreichend erwiesen, die Druckluft des Hauptluftleitung für das Trocknen und/oder Kühlen der im Gehäuse angeordneten Komponenten zu verwenden.

Bei einer weiteren vorteilhaften Ausgestaltungsform ist im Gehäuse ein Stromrichter angeordnet. Stromrichter sind für den Betrieb des Schienenfahrzeugs meistens von besonderer Bedeutung, da diese für den Betrieb erforderlich sind. Bei dem Stromrichter kann es sich um einen Traktionsstromrichter für den Antrieb des Schienenfahrzeugs oder um einen Hilfsbetriebeumrichter zur Speisung von elektrischen Verbrauchern des Schienenfahrzeugs handeln. Daher hat es sich als sinnvoll erwiesen, nicht nur die Leistungshalbleiter im Gehäuse mit feuchtigkeitsarmer Luft zu betreiben, sondern den gesamten Stromrichter mit seinen Stromschienen in das Gehäuse zu integrieren. Aufgrund der hohen Kosten eines Stromrichters werden diese selten redundant ausgelegt. Ein Ausfall eines Stromrichters in der Traktion verursacht häufig den kompletten Ausfall des Schienenfahrzeugs. Zumindest ist ein Betrieb nur noch mit eingeschränkter Leistung möglich. Daher wird bei der Konstruktion und der Auslegung von Schienenfahrzeugen im Zuge der Sicherstellung einer hohen Verfügbarkeit ein besonderes Augenmerk auf die Ausfallsicherheit dieser Stromrichter gelegt. Durch den Betrieb des Stromrichters oder Teilen des Stromrichters mit feuchtigkeitsarmer Luft, die durch das Zuführen von entsprechender Menge Druckluft erreicht wird, kann ein deutlicher Beitrag zu einer hohen Ausfallsicherheit geleistet werden.

Im Folgenden wird die Erfindung anhand der in den Figuren dargestellten Ausführungsbeispiele näher beschrieben und erläutert. Es zeigen:
- FIG 1: ein Schienenfahrzeug mit einer einem Bremssystem,
- FIG 2: ein Gehäuse mit einem Leistungshalbleiter und
- FIG 3: einen Leistungshalbleiter mit Kühlkörper und Stromschiene.

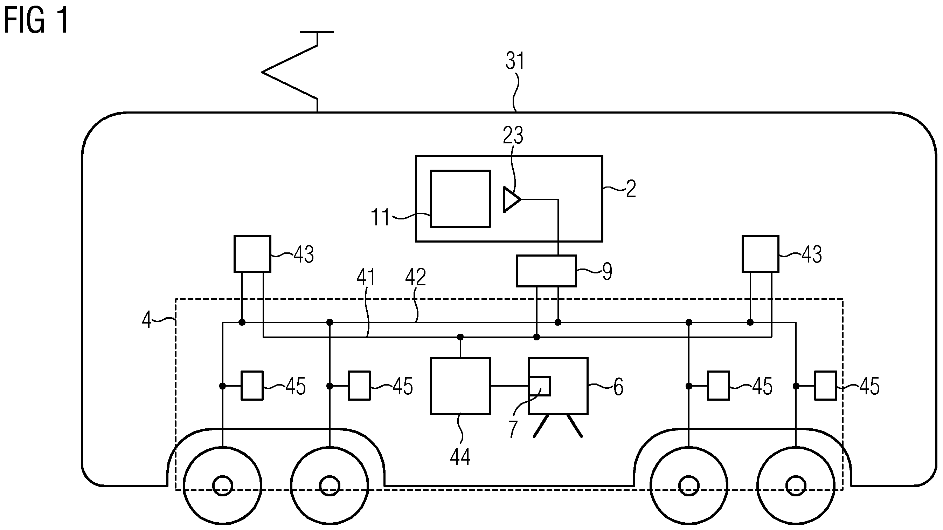

FIG 1 zeigt ein Schienenfahrzeug 31 mit einem schematisch dargestellten Bremssystem 4 und einem Gehäuse 2 in dem Leistungshalbleiter 11 angeordnet sind, die in einer trockenen und/oder kühlen Umgebung betrieben werden sollen.

Das Bremssystem umfasst eine Vorrichtung 6 zur Erzeugung von Druckluft 10. Dazu kann ein Kompressor oder ein oder ein Luftpresser verwendet werden. Die Vorrichtung 6 zur Erzeugung von Druckluft 10 weist Mittel 7 zur Trocknung von Druckluft 10 auf. Diese Druckluft 10 wird einem Hauptluftbehälter 44 zugeführt. Dieser Hauptluftbehälter 44 hat die Aufgabe, Druckluft 10 für das Schienenfahrzeug 31 zu speichern. Der Hauptluftbehälter 44 ist mit der Hauptluftbehälterleitung 41 verbunden. Die Hauptluftbehälterleitung 41 verteilt die Druckluft 10 über das gesamte Schienenfahrzeug 31. Die Vorrichtung 6 zur Erzeugung von Druckluft 10 erzeugt einen Druck in der Hauptluftbehälterleitung 41 zwischen 8,5 bar und 10 bar. Bei älteren Fahrzeugen liegt der Druck im Bereich von 6,5 bar bis 8 bar. Wenn das Schienenfahrzeug 31 mehrere Wagen aufweist, erstreckt sich die Hauptluftbehälterleitung 41 über das gesamte Schienenfahrzeug 31 und dessen Wagen. Somit steht im gesamten Schienenfahrzeug Druckluft 10 über die Hauptluftbehälterleitung 41 zur Verfügung. Die Hauptluftbehälterleitung 41 versorgt unter anderem in den Führerständen vorhandene Bremsventile 43, die zur Ansteuerung der Bremse durch den Fahrzeugführer vorgesehen sind. Mit diesen Bremsventilen 43 lässt sich die Bremse des Schienenfahrzeugs 31 steuern. Dazu ist das Bremsventil 43 neben der Hauptluftbehälterleitung 41 auch mit einer Hauptluftleitung 42 verbunden. Die Hauptluftleitung 42 wird über die Hauptluftbehälterleitung 41 mit Druckluft 10 versorgt. Der Druck der Hauptluftleitung 42 beträgt im ungebremsten Zustand 5 bar. Er kann darüber hinaus im Betrieb auch Werte im Bereich von 4 bar bis 6 bar annehmen. Mithilfe des Bremsventils 43 kann der Druck in der Hauptluftleitung 42 abgesenkt werden, wodurch eine Bremsung an den Rädern oder Achsen des Schienenfahrzeugs 31 eingeleitet wird. Die dazu notwendigen Einrichtungen wie beispielsweise Bremsklötze sind in dieser Figur nicht dargestellt. Ein Hilfsluftbehälter 45 gewährleistet das sichere Bremsen auch bei einem Leck in der Hauptluftleitung 42 oder Hauptluftbehälterleitung 41.

Somit stehen im Schienenfahrzeug 31 sowohl die Hauptluftbehälterleitung 41 als auch die Hauptluftleitung 42 für die Entnahme von Druckluft 10 zur Verfügung. In dem Ausführungsbeispiel der FIG 1 ist die Entspannvorrichtung 9 sowohl mit der Hauptluftbehälterleitung 41 als auch mit der Hauptluftleitung 42 verbunden. Es hat sich darüber hinaus als sinnvoll erwiesen, nur die Hauptluftbehälterleitung 41 oder nur die Hauptluftleitung 42 mit dem Eingang der Entspannvorrichtung 9 zu verbinden. Die Entspannvorrichtung 9 ist außerhalb des Gehäuses 2 angeordnet. Damit wird zuverlässig vermieden dass bei einem Brand innerhalb des Gehäuses 2 unkontrolliert Druckluft 10 dem Gehäuse 2 zugeführt wird. Mit der Anordnung der Entspannvorrichtung 9 außerhalb des Gehäuses 2 befindet sich das Stellglied für die Zufuhr der Druckluft 10 außerhalb des Gehäuses 2. Eine Beschädigung im Falle eines Brandes im Gehäuse 2 und damit ein unkontrollierter Zufluss an Druckluft 10 können damit zuverlässig vermieden werden. Über eine hier nicht dargestellte Schnittstelle 20 zur Zuführung von Druckluft 10 gelangt die entspannte Druckluft 10 von der Entspannvorrichtung 9 in das Innere des Gehäuses 2. Die zugeführte, entspannte Druckluft weist eine geringe relative Feuchte auf. Mit dieser ist es möglich, die relative Feuchte der Luft im Innern des Gehäuses 2 durch Verdrängung von Luft mit höherer Feuchte zu reduzieren. Auch das Mischen dieser entspannten Druckluft mit der vorhandenen Luft im Gehäuse 2 führt zu einer Reduktion der relativen Luftfeuchtigkeit. Darüber hinaus besitzt die zugeführte, entspannte Druckluft 10 eine geringere Temperatur als die Luft im Innern des Gehäuses 2, die durch das Einbringen der entspannten Druckluft 10 verdrängt wird bzw. mit ihr gemischt wird. Damit kann eine Kühlung von Komponenten im Innern des Gehäuses 2, wie beispielsweise Leistungshalbleiter 11 oder Stromschienen 33, erreicht werden. Dazu ist im Innern des Gehäuses 2 in vorteilhafter Weise ein Mittel 23 zum Führen von entspannter Druckluft 10 derart angeordnet, dass die zugeführte, entspannte Druckluft 10 einem Leistungshalbleiter 11, einem Kühlkörper 32 des Leistungshalbleiters 11 und/oder einer Stromschiene 33 derart zugeführt werden kann, dass die entsprechende Druckluft zumindest teilweise daran entlang strömt.

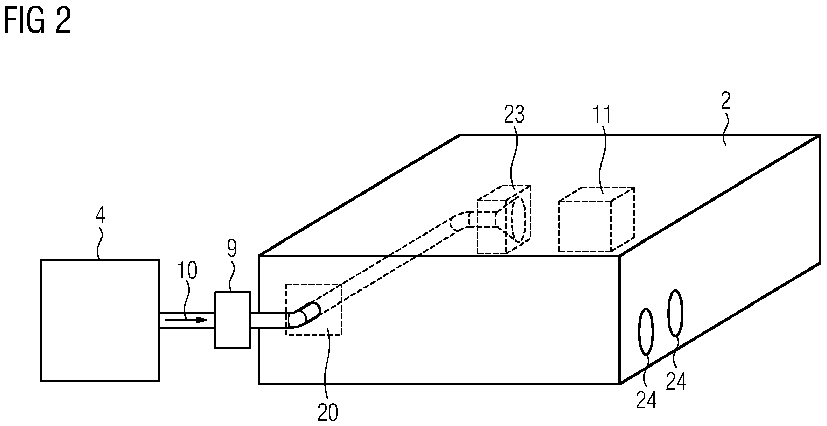

FIG 2 zeigt ein Gehäuse 2 mit einem Leistungshalbleiter 11. Die für die Trocknung und/oder Kühlung von Komponenten, insbesondere Leistungshalbleitern 11, vorgesehene Druckluft 10 wird dem Bremssystem 4 des Schienenfahrzeugs 31 entnommen. Für die Beschreibung des Bremssystems 4 mit seinen Komponenten, insbesondere die Komponenten, die Druckluft 10 führen, wird auf die Beschreibung zur Figur 1 und die dort eingeführten Bezugszeichen verwiesen. Dem Bremssystem 4 wird Druckluft 10 entnommen und der Entspannvorrichtung 9 zugeführt. Die Entspannvorrichtung 9 verringert den Druck der Druckluft 10. Dadurch steht eine entspannte Druckluft 10 mit geringer relativen Feuchte und geringer Temperatur zur Verfügung. Die Entspannvorrichtung 9 ist außerhalb des Gehäuses 2 angeordnet, damit diese im Fall eines Brandes im Gehäuse 2 nicht beschädigt wird. Dadurch wird ein unkontrolliertes Zuströmen von Sauerstoff durch die Druckluft 10 im Brandfall vermieden. Die entspannte Druckluft 10 wird über eine Schnittstelle 20 zur Zuführung von Druckluft 10 in das Innere des Gehäuses 2 geführt. Durch ein Mittel 23 zum Führen von entspannter Druckluft wird die entspannte Druckluft 10 zu einem Leistungshalbleiter 11, einem Kühlkörper 32 und/oder einer Stromschiene 33 geführt. Die entspannte Druckluft 10 kann nun sicherstellen dass der Leistungshalbleiter 11 in einer Umgebung mit trockener Luft betrieben wird. Darüber hinaus können der Leistungshalbleiter 11, ein hier nicht dargestellter Kühlkörper 32 des Leistungshalbleiters 11 und/oder eine hier nicht dargestellte Stromschiene 33 durch die entspannte Druckluft 10 gekühlt werden, da durch das Entspannen die zugeführte Druckluft 10 eine geringe Temperatur aufweist.

Um einen Druckanstieg im Innern des Gehäuses 2 beim Zuführen von Druckluft 10 zu vermeiden, kann das Gehäuse 2 Öffnungen 24 im Gehäuse 2 aufweisen.

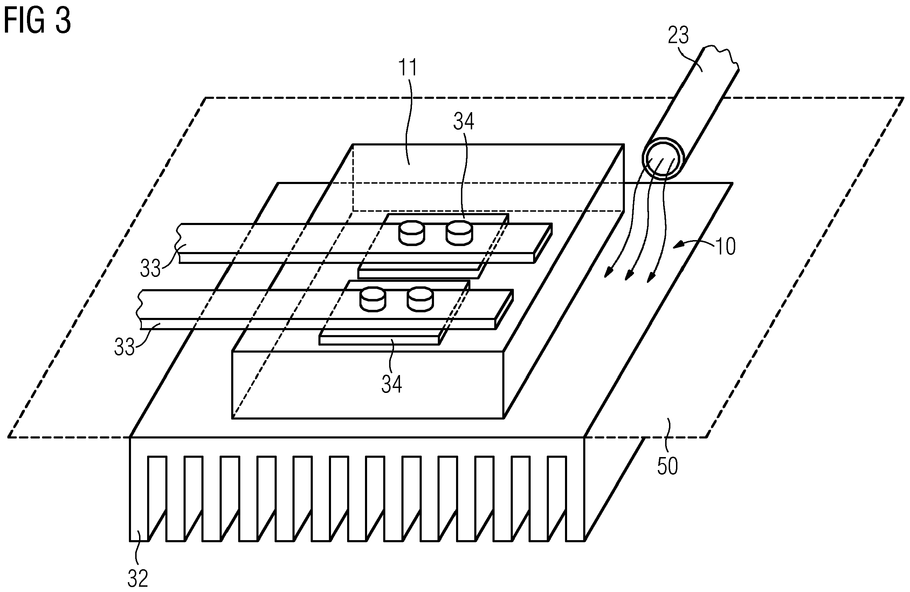

FIG 3 zeigt einen Leistungshalbleiter 11 der auf einem Kühlkörper 32 angeordnet ist. Um eine Verschmutzung des Leistungshalbleiters 11 zu vermeiden, ist der Raum, der von einer mittels eines Lüfters erzeugten Luftströmung mit teils verschmutzter Luft durchströmt wird, von dem weiteren Raum mit dem Leistungshalbleiter 11 durch eine Trennwand 50 getrennt. Die verschmutzte Luft der durch den Lüfter erzeugten Luftströmung kann durch die Trennwand 50 nicht zum Leistungshalbleiter 11 gelangen. Der weitere Raum, in der der Leistungshalbleiter 11 und die Stromschienen 33 angeordnet sind, wird oftmals als sauberer Raum bezeichnet, da er gegenüber einer verschmutzten Luft der Umgebung mittels der Trennwand 50 getrennt ist. Es hat sich als günstig erwiesen, die Teile des Kühlkörpers 32, die im sauberen Raum angeordnet sind, d.h. auf der Seite des Kühlkörpers 32 liegen, auf dem der Leistungshalbleiter 11 angeordnet ist, mit entspannter Druckluft 10 in Berührung zu bringen. Mithilfe des Mittels 23 zum Führen von entspannter Druckluft 10 wird die entspannte Druckluft 10 derart zur Oberfläche des Kühlkörpers 32 geführt, dass die Druckluft 10 sich entlang von Teilen des Kühlkörpers 32 bewegt. Dadurch kann eine Kühlwirkung für den Kühlkörper und den daran angeordneten Leistungshalbleiter 11 erreicht werden. Ebenso ist es möglich, alternativ oder ergänzend, das Mittel 23 oder ein weiteres Mittel 23 zum Führen von entspannter Druckluft 10 derart anzuordnen, dass die herausströmende entspannte Druckluft 10 auf eine Stromschiene 33 gerichtet ist, die mittels eines elektrischen Anschlusses 34 mit dem Leistungshalbleiter 11 verbunden ist. Durch das Heranführen der kühlen, entspannten Druckluft 10 an zumindest Teile der Stromschiene 33 kann diese gekühlt werden, so dass die Stromschiene 33 zum einen kleiner dimensioniert werden kann und eine höhere Stromtragfähigkeit aufweist.

In dieser Figur sind der Übersichtlichkeit halber nur Teile der Stromschiene 33 dargestellt.

Obwohl die Erfindung im Detail durch die bevorzugten Ausführungsbeispiele näher illustriert und beschrieben wurde, ist die Erfindung nicht allein auf das offenbarte Beispiel beschränkt und andere Variationen können vom Fachmann hieraus abgeleitet werden, ohne den Schutzumfang der Erfindung zu verlassen.

Zusammenfassend betrifft die Erfindung ein Schienenfahrzeug, aufweisend einen elektrischen Antrieb mit Leistungshalbleitern und ein mit Druckluft betriebenes Bremssystems, wobei die Leistungshalbleiter in einem Gehäuse angeordnet sind. Zur Steigerung der Zuverlässigkeit des Schienenfahrzeugs wird vorgeschlagen, dass das Schienenfahrzeug eine Entspannvorrichtung aufweist, wobei das Gehäuse und das Bremssystem derart miteinander verbunden sind, dass die Druckluft aus dem Bremssystem dem Innern des Gehäuses zuführbar ist, wobei die Entspannvorrichtung derart zwischen Gehäuse und Bremssystem angeordnet ist, dass die dem Gehäuse zuführbare Druckluft vor dem Zuführen in das Innere des Gehäuses entspannbar ist. Die Erfindung betrifft weiter ein Verfahren zum Betreiben eines solchen Schienenfahrzeugs wobei die Druckluft aus dem Bremssystem dem Innern des Gehäuses zugeführt wird und wobei die dem Gehäuse zugeführte Druckluft vor dem Zuführen in das Innere des Gehäuses mittels der Entspannvorrichtung entspannt wird.

## Patentansprüche

1. Schienenfahrzeug (31), aufweisend
- einen elektrischen Antrieb mit Leistungshalbleitern (11) und
- ein mit Druckluft (10) betriebenes Bremssystems (4),
wobei die Leistungshalbleiter (11) in einem Gehäuse (2) angeordnet sind, **dadurch gekennzeichnet, dass** das Schienenfahrzeug (31) eine Entspannvorrichtung (9) aufweist, wobei das Gehäuse (2) und das Bremssystem (4) derart miteinander verbunden sind, dass die Druckluft (10) aus dem Bremssystem (4) dem Innern des Gehäuses (2) zuführbar ist, wobei die Entspannvorrichtung (9) derart zwischen Gehäuse (2) und Bremssystem (4) angeordnet ist, dass die dem Gehäuse (2) zuführbare Druckluft (10) vor dem Zuführen in das Innere des Gehäuses (2) entspannbar ist.

2. Schienenfahrzeug (31) nach Anspruch 1, wobei das Gehäuse (2) Mittel zum Führen der Druckluft (10) aufweist, die derart angeordnet sind, dass die Druckluft (10) zumindest teilweise entlang der Leistungshalbleiter (11), eines Kühlkörpers (32) des Leistungshalbleiters (11) und/oder einer Stromschiene (33) strömt.

3. Schienenfahrzeug (31) nach einem der Ansprüche 1 oder 2, wobei die Entspannvorrichtung (9) als ein Druckminderventil ausgebildet ist.

4. Schienenfahrzeug (31) nach einem der Ansprüche 1 bis 3, wobei das Gehäuse (2) luftdurchlässig ist.

5. Schienenfahrzeug (31) nach einem der Ansprüche 1 bis 4, wobei das Bremssystem (4) eine Hauptluftbehälterleitung (41) und/oder eine Hauptluftleitung (42) aufweist, wobei die dem Gehäuse (2) zuführbare Druckluft (10) aus der Hauptluftbehälterleitung (41) und/oder der Hauptluftleitung (42) entnehmbar ist.

6. Schienenfahrzeug (31) nach einem der Ansprüche 1 bis 5, wobei im Gehäuse (2) ein Stromrichter (30) angeordnet ist.

7. Verfahren zum Betreiben eines Schienenfahrzeugs nach einem der Ansprüche 1 bis 6, wobei die Druckluft (10) aus dem Bremssystem (4) dem Innern des Gehäuses (2) zugeführt wird, wobei die dem Gehäuse (2) zugeführte Druckluft (10) vor dem Zuführen in das Innere des Gehäuses (2) mittels der Entspannvorrichtung (9) entspannt wird.

8. Verfahren nach Anspruch 7, wobei zur Kühlung die Druckluft (10) im Innern des Gehäuses (2) derart geführt wird, dass die Druckluft (10) zumindest teilweise entlang der Leistungshalbleiter (11), eines Kühlkörpers (32) der Leistungshalbleiter (11) und/oder einer Stromschiene (33) strömt.

9. Verfahren nach einem der Ansprüche 7 oder 8, wobei der Druck im Innern des Gehäuses (2) dem Druck der Umgebung entspricht.

10. Verfahren nach einem der Ansprüche 7 bis 9, wobei dem Bremssystem (4) die Druckluft (10) aus der Hauptluftbehälterleitung (41) und/oder der Hauptluftleitung (42) gemäß Anspruch 5 entnommen wird.

## Claims

1. Rail vehicle (31) having
- an electric drive with power semiconductors (11) and
- a braking system (4) operated with compressed air (10),
wherein the power semiconductors (11) are arranged in a housing (2), **characterised in that** the rail vehicle (31) has a depressurisation device (9), wherein the housing (2) and the braking system (4) are interconnected such that the compressed air (10) can be supplied from the braking system (4) to the interior of the housing (2), wherein the depressurisation device (9) is arranged between housing (2) and braking system (4) such that the compressed air (10) that can be supplied to the housing (2) can be depressurised prior to being supplied to the interior of the housing (2).

2. Rail vehicle (31) according to claim 1, wherein the housing (2) has means for guiding the compressed air (10) which are arranged such that the compressed air (10) flows at least partially along the power semiconductors (11), a heat sink (32) of the power semiconductor (11) and/or a busbar (33).

3. Rail vehicle (31) according to one of claims 1 or 2, wherein the depressurisation device (9) is designed as a pressure-reducing valve.

4. Rail vehicle (31) according to one of claims 1 to 3, wherein the housing (2) is air-permeable.

5. Rail vehicle (31) according to one of claims 1 to 4, wherein the braking system (4) has a main air reservoir line (41) and/or a main air line (42), wherein the compressed air (10) that can be supplied to the housing (2) can be removed from the main air reservoir line (41) and/or the main air line (42) .

6. Rail vehicle (31) according to one of claims 1 to 5, wherein a power converter (30) is arranged in the housing (2).

7. Method for operating a rail vehicle according to one of claims 1 to 6, wherein the compressed air (10) is supplied from the braking system (4) to the interior of the housing (2), wherein the compressed air (10) supplied to the housing (2) is depressurised prior to being supplied to the interior of the housing (2) by means of the depressurisation device (9) .

8. Method according to claim 7, wherein for cooling the compressed air (10) is guided in the interior of the housing (2) such that the compressed air (10) flows at least partially along the power semiconductors (11), a heat sink (32) of the power semiconductors (11) and/or a busbar (33).

9. Method according to one of claims 7 or 8, wherein the pressure in the interior of the housing (2) corresponds to the ambient pressure.

10. Method according to one of claims 7 to 9, wherein the compressed air (10) from the main air reservoir line (41) and/or the main air line (42) is removed from the braking system (4) according to claim 5.

## Revendications

1. Véhicule (31) ferroviaire, comportant
- un entraînement électrique ayant des semiconducteurs (11) de puissance et
- un système (4) de frein fonctionnant par de l'air (10) comprimé, les semiconducteurs (11) de puissance étant disposés dans un boîtier (2), **caractérisé**
**en ce que** le véhicule (31) ferroviaire a un dispositif (9) de détente, le boîtier et le système (4) de frein communiquant entre eux, de manière à pouvoir envoyer l'air (10) comprimé du système (4) de frein à l'intérieur du boîtier (2), le dispositif (9) de détente étant disposé entre le boîtier (2) et le système (4) de frein, de manière à pouvoir détendre l'air (10) comprimé pouvant être envoyé au boîtier (2) avant l'envoi à l'intérieur du boîtier (2).

2. Véhicule (31) ferroviaire suivant la revendication 1, dans lequel le boîtier a deux moyens pour conduire l'air (10) comprimé, qui sont disposés de manière à ce que l'air (10) comprimé passe, au moins en partie, le long des semiconducteurs (11) de puissance, d'un refroidisseur (32) des conducteurs (11) de puissance et/ou d'une barre (33) conductrice.

3. Véhicule (31) ferroviaire suivant l'une des revendications 1 ou 2,
dans lequel le dispositif (9) de détente est constitué sous la forme d'un détendeur.

4. Véhicule (31) ferroviaire suivant l'une des revendications 1 à 3,
dans lequel le boîtier (2) est perméable à l'air.

5. Véhicule (31) ferroviaire suivant l'une des revendications 1 à 4,
dans lequel le système (4) de frein a un conduit (41) de réservoir d'air principal et/ou un conduit (42) d'air principal, l'air (10) comprimé, pouvant être envoyé au boîtier, (2) pouvant être prélevé du conduit (41) de réservoir d'air principal et/ou du conduit (42) d'air principal.

6. Véhicule (31) ferroviaire suivant l'une des revendications 1 à 5,
dans lequel un convertisseur (30) de courant est disposé dans le boîtier (2).

7. Procédé pour faire fonctionner un véhicule ferroviaire suivant l'une des revendications 1 à 6, dans lequel on envoie l'air (10) comprimé du système (4) de frein à l'intérieur du boîtier (2), dans lequel on détend au moyen du dispositif (9) de détente, l'air (10) comprimé envoyé au boîtier (2) avant l'envoi à l'intérieur du boîtier (2).

8. Procédé suivant la revendication 7, dans lequel, pour le refroidissement, on envoie l'air (10) comprimé à l'intérieur du boîtier (2), de manière à ce que l'air (10) comprimé passe, au moins en partie, le long des semiconducteurs (11) de puissance, d'un refroidisseur (32) des semiconducteurs (11) de puissance et/ou d'une barre (33) conductrice.

9. Procédé suivant l'une des revendications 7 ou 8, dans lequel la pression à l'intérieur du boîtier (2) correspond à la pression ambiante.

10. Procédé suivant l'une des revendications 7 à 9, dans lequel on prélève du système (4) de frein l'air (10) comprimé, du conduit (41) de réservoir d'air principal et/ou du conduit (42) d'air principal suivant la revendication 5.
